# EUROPEAN PATENT APPLICATION

(11) **EP 4 832 492 A1**
(43) Date of publication of application: **28.10.2026**
(21) Application number: 25772346.0
(22) Date of filing: 26.02.2025
(51) Int. Cl.: H04N 19/577, H04N 19/105, H04N 19/184

(54) **IMAGE ENCODING/DECODING METHOD AND DEVICE, AND RECORDING MEDIUM STORING BITSTREAM**

(30) Priority: 13.03.2024 KR 20240034921
(71) Applicant: Hyundai Motor Company, Seoul 06797 (KR); Kia Corporation, Seoul 06797 (KR)
(72) Inventor: CHOI, Jungah, Hwaseong-si Gyeonggi-do 18280 (KR); HEO, Jin, Hwaseong-si Gyeonggi-do 18280 (KR); PARK, Seung Wook, Hwaseong-si Gyeonggi-do 18280 (KR)
(74) Representative: Isarpatent
(86) International application number: PCT/KR2025/002705
(87) International publication number: WO 2025/192907

(57) **Abstract**

Provided is an image decoding method comprising determining a prediction sample of a current block using a first reference block derived from a first reference picture and a second reference block derived from a second reference picture, determining that a refinement according to bidirectional optical flow is applied to the current block, based on a temporal distance difference between the first reference picture and a current picture and a temporal distance difference between the second reference picture and the current picture, determining a bidirectional optical flow offset in response to application of the refinement according to the bidirectional optical flow, and refining the prediction sample of the current block based on the bidirectional optical flow offset.

## Description

### Technical Field

The present invention relates to an image encoding/decoding method and apparatus and a recording medium for storing a bitstream. More particularly, the present invention relates to an image encoding/decoding method and apparatus using improvement of bidirectional optical flow and a recording medium for storing a bitstream.

### Background Art

Recently, the demand for high-resolution, high-quality images such as ultra-high definition (UHD) images is increasing in various application fields. As image data becomes higher in resolution and quality, the amount of data increases relatively compared to existing image data. Therefore, when transmitting image data using media such as existing wired and wireless broadband lines or storing image data using existing storage media, the transmission and storage costs increase. In order to solve these problems that occur as image data becomes higher in resolution and quality, high-efficiency image encoding/decoding technology for images with higher resolution and quality is required.

Bi-directional Optical Flow (BDOF) is a technique introduced to improve the accuracy of inter prediction. In bidirectional prediction, motion compensation is performed by referencing the temporally preceding and subsequent reference pictures. However, there are limitations to precisely estimating motion in block units. In particular, when the movement of an object or background is complex or a speed thereof vary significantly, it is difficult to properly capture complex changes using only simple forward or backward references. Therefore, by correcting the motion vectors obtained through bidirectional prediction using optical flow techniques, more precise motion vectors may be acquired. Various methods are being discussed to improve the prediction accuracy of bidirectional prediction by refining bidirectional optical flow techniques.

### Disclosure

### Technical Problem

An object of the present invention is to provide a method and apparatus for encoding/decoding an image with improved encoding/decoding efficiency.

Another object of the present invention is to provide a recording medium for storing a bitstream that is generated by generated by a method or apparatus for decoding an image, which is provided in the present invention.

### Technical Solution

An image decoding method according to an embodiment of the present invention may comprise determining a prediction sample of a current block using a first reference block derived from a first reference picture and a second reference block derived from a second reference picture, determining that a refinement according to bidirectional optical flow is applied to the current block, based on a temporal distance difference between the first reference picture and a current picture and a temporal distance difference between the second reference picture and the current picture, determining a first horizontal gradient and a first vertical gradient of reference samples of the first reference block and a second horizontal gradient and a second vertical gradient of reference samples of the second reference block, in response to application of the refinement according to bidirectional optical flow, determining a first residual small displacement of the first reference block and a second residual small displacement of the second reference block, based on the first horizontal gradient, the first vertical gradient, the second horizontal gradient, and the second vertical gradient, determining a bidirectional optical flow offset based on the first residual small displacement and the second residual small displacement, and refining the prediction sample of the current block based on the bidirectional optical flow offset.

According to an embodiment, it may be determined that the refinement according to bidirectional optical flow is applied to the current block, in response to magnitudes of the temporal distance difference between the first reference picture and the current picture and the temporal distance difference between the second reference picture and the current picture being different.

According to an embodiment, it may be determined that the refinement according to bidirectional optical flow is applied to the current block, in response to a temporal direction of the first reference picture from the current picture and a temporal direction of the first reference picture from the current picture being the same.

According to an embodiment, the second residual small displacement of the second reference block may be determined to be equal in magnitude to the first residual small displacement of the first reference block and opposite in direction.

According to an embodiment, the second residual small displacement of the second reference block may be determined by multiplying the first residual small displacement of the first reference block by a weight.

According to an embodiment, the weight may include a horizontal weight for a horizontal component of the second residual small displacement and a vertical weight for a vertical component of the second residual small displacement.

According to an embodiment, the weight may be determined based on a temporal distance difference between the first reference picture and the current picture and a temporal distance difference between the second reference picture and the current picture.

According to an embodiment, a magnitude of the weight may be determined based on a ratio of a magnitude of the temporal distance difference between the first reference picture and the current picture and a magnitude of the temporal distance difference between the second reference picture and the current picture, and a sign of the weight may be determined based on a sign of the temporal distance difference between the first reference picture and the current picture and a sign of the temporal distance difference between the second reference picture and the current picture.

According to an embodiment, the weight may be determined according to encoding information related to the current block, and the encoding information related to the current block may include at least one of frames per second of a video, a resolution of a picture, a Group of Picture (GOP) included in a picture, a slice type of a slice, and quantization parameters.

According to an embodiment, the weight may be determined from weight information that explicitly indicates the weight, and the weight information may be included in at least one of a slice header, picture header, picture parameter set, sequence parameter set, and video parameter set associated with the current block.

According to an embodiment, the weight may be derived from weights of one or more of adjacent blocks of the current block.

According to an embodiment, the weight may be determined based on weight information used for decoder-side motion vector refinement when decoder-side motion vector refinement is applied to the current block.

According to an embodiment, in the determining the bidirectional optical flow offset, when a ratio of a magnitude of a temporal distance difference between the second reference picture and the current picture to a magnitude of a temporal distance difference between the first reference picture and the current picture is greater than a predetermined threshold, the bidirectional optical flow offset may be determined based only on the first residual small displacement, not based on the second residual small displacement.

According to an embodiment, in the determining the bidirectional optical flow offset, when a temporal distance difference between the second reference picture and the current picture is greater than a predetermined threshold, the bidirectional optical flow offset may be determined based only on the first residual small displacement, not based on the second residual small displacement.

According to an embodiment, in the determining the bidirectional optical flow offset, when only the first motion vector among the first motion vector and the second motion vector of the current block may be refined by the decoder-side motion vector refinement, the bidirectional optical flow offset is determined based only on the first residual small displacement, not based on the second residual small displacement.

According to an embodiment, in the determining the bidirectional optical flow offset, when a position corresponding to the first motion vector of the current block and the first residual small displacement is within a picture boundary or slice boundary, and a position corresponding to the second motion vector and the second residual small displacement is outside the picture boundary or slice boundary, the bidirectional optical flow offset may be determined based only on the first residual small displacement and not on the second residual small displacement.

An image encoding method according to an embodiment of the present invention may comprise determining a prediction sample of a current block using a first reference block derived from a first reference picture and a second reference block derived from a second reference picture, determining that a refinement according to bidirectional optical flow is applied to the current block, based on a temporal distance difference between the first reference picture and a current picture and a temporal distance difference between the second reference picture and the current picture, determining a first horizontal gradient and a first vertical gradient of reference samples of the first reference block and a second horizontal gradient and a second vertical gradient of reference samples of the second reference block, in response to application of the refinement according to bidirectional optical flow, determining a first residual small displacement of the first reference block and a second residual small displacement of the second reference block, based on the first horizontal gradient, the first vertical gradient, the second horizontal gradient, and the second vertical gradient, determining a bidirectional optical flow offset based on the first residual small displacement and the second residual small displacement, and refining the prediction sample of the current block based on the bidirectional optical flow offset.

A non-transitory computer-readable recording medium according to an embodiment of the present invention may store a bitstream generated by the image encoding method.

A transmission method according to an embodiment of the present invention transmits a bitstream generated by the image encoding method.

The features briefly summarized above with respect to the present disclosure are merely exemplary aspects of the detailed description below of the present disclosure, and do not limit the scope of the present disclosure.

### Advantageous Effects

The present invention proposes various embodiments of a method of correcting a motion vector according to a bidirectional optical flow technique.

In addition, the present invention proposes various embodiments of an adaptive bidirectional optical flow technique.

According to the various embodiments above, as the prediction accuracy of the bidirectional prediction method based on the bidirectional optical flow technique is improved, overall coding efficiency can be improved.

### Description of Drawings

FIG. 1 is a block diagram showing a configuration of an encoding apparatus an embodiment of the present invention.
FIG. 2 is a block diagram showing a configuration of a decoding apparatus according to an embodiment of the present invention.
FIG. 3 is a diagram schematically showing a video coding system to which the present invention is applicable.
FIG. 4 illustrates an embodiment of a motion vector refinement method according to a BDOF technique when distances between two reference pictures and a current picture are the same.
FIG. 5 illustrates an embodiment of a motion vector refinement method according to a BDOF technique when distances between two reference pictures and a current picture are not the same.
FIG. 6 illustrates an embodiment of a motion vector refinement method according to a BDOF technique when two reference pictures referenced by a current picture are in the same temporal direction from the current picture.
FIG. 7 illustrates an embodiment of a motion vector refinement method according to a BDOF technique.
FIG. 8 exemplarily illustrates a content streaming system to which an embodiment according to the present invention is applicable.

### Best Mode

An image decoding method according to an embodiment of the present invention may comprise determining a prediction sample of a current block using a first reference block derived from a first reference picture and a second reference block derived from a second reference picture, determining that a refinement according to bidirectional optical flow is applied to the current block, based on a temporal distance difference between the first reference picture and a current picture and a temporal distance difference between the second reference picture and the current picture, determining a first horizontal gradient and a first vertical gradient of reference samples of the first reference block and a second horizontal gradient and a second vertical gradient of reference samples of the second reference block, in response to application of the refinement according to bidirectional optical flow, determining a first residual small displacement of the first reference block and a second residual small displacement of the second reference block, based on the first horizontal gradient, the first vertical gradient, the second horizontal gradient, and the second vertical gradient, determining a bidirectional optical flow offset based on the first residual small displacement and the second residual small displacement, and refining the prediction sample of the current block based on the bidirectional optical flow offset.

### Mode for Invention

The present disclosure may have various modifications and embodiments, and specific embodiments are illustrated in the drawings and described in detail in the detailed description. However, this is not intended to limit the present disclosure to specific embodiments, but should be understood to include all modifications, equivalents, or substitutes included in the spirit and technical scope of the present disclosure. Similar reference numerals in the drawings indicate the same or similar functions throughout various aspects. The shapes and sizes of elements in the drawings may be provided by way of example for a clearer description. The detailed description of the exemplary embodiments described below refers to the accompanying drawings, which illustrate specific embodiments by way of example. These embodiments are described in sufficient detail to enable those skilled in the art to practice the embodiments. It should be understood that the various embodiments are different from each other, but are not necessarily mutually exclusive. For example, specific shapes, structures, and characteristics described herein may be implemented in other embodiments without departing from the spirit and scope of the present disclosure with respect to one embodiment. It should also be understood that the positions or arrangements of individual components within each disclosed embodiment may be changed without departing from the spirit and scope of the embodiment. Accordingly, the detailed description set forth below is not intended to be limiting, and the scope of the exemplary embodiments is defined only by the appended claims, along with the full scope of equivalents to which such claims are entitled, if properly described.

In the present disclosure, the terms first, second, etc. may be used to describe various components, but the components should not be limited by the terms. The terms are only used for the purpose of distinguishing one component from another. For example, without departing from the scope of the present disclosure, the first component may be referred to as the second component, and similarly, the second component may also be referred to as the first component. The term is and/or includes a combination of a plurality of related described items or any item among a plurality of related described items.

The components shown in the embodiments of the present disclosure are independently depicted to indicate different characteristic functions, and do not mean that each component is formed as a separate hardware or software configuration unit. That is, each component is listed and included as a separate component for convenience of explanation, and at least two of the components may be combined to form a single component, or one component may be divided into multiple components to perform a function, and embodiments in which components are integrated and embodiments in which each component is divided are also included in the scope of the present disclosure as long as they do not deviate from the essence of the present disclosure.

The terminology used in the present disclosure is only used to describe specific embodiments and is not intended to limit the present disclosure. The singular expression includes the plural expression unless the context clearly indicates otherwise. In addition, some components of the present disclosure are not essential components that perform essential functions in the present disclosure and may be optional components only for improving performance. The present disclosure may be implemented by including only essential components for implementing the essence of the present disclosure excluding components only used for improving performance, and a structure including only essential components excluding optional components only used for improving performance is also included in the scope of the present disclosure.

In an embodiment, the term "at least one" may mean one of a number greater than or equal to 1, such as 1, 2, 3, and 4. In an embodiment, the term "a plurality of" may mean one of a number greater than or equal to 2, such as 2, 3, and 4.

Hereinafter, embodiments of the present disclosure will be specifically described with reference to the drawings. In describing the embodiments of this specification, if it is determined that a detailed description of a related known configuration or function may obscure the subject matter of this specification, the detailed description will be omitted, and the same reference numerals will be used for the same components in the drawings, and repeated descriptions of the same components will be omitted.

### Description of terms

Hereinafter, "image" may mean one picture constituting a video, and may also refer to the video itself. For example, "encoding and/or decoding of an image" may mean "encoding and/or decoding of a video," and may also mean "encoding and/or decoding of one of images constituting the video."

Hereinafter, "moving image" and "video" may be used with the same meaning and may be used interchangeably. In addition, a target image may be an encoding target image that is a target of encoding and/or a decoding target image that is a target of decoding. In addition, the target image may be an input image input to an encoding apparatus and may be an input image input to a decoding apparatus. Here, the target image may have the same meaning as a current image.

Hereinafter, "image", "picture", "frame" and "screen" may be used with the same meaning and may be used interchangeably.

Hereinafter, a "target block" may be an encoding target block that is a target of encoding and/or a decoding target block that is a target of decoding. In addition, the target block may be a current block that is a target of current encoding and/or decoding. For example, "target block" and "current block" may be used with the same meaning and may be used interchangeably.

Hereinafter, "block" and "unit" may be used with the same meaning and may be used interchangeably. In addition, "unit" may mean including a luma component block and a chroma component block corresponding thereto in order to distinguish it from a block. For example, a coding tree unit (CTU) may be composed of one luma component (Y) coding tree block (CTB) and two chroma component (Cb, Cr) coding tree blocks related to it.

Hereinafter, "sample", "picture element" and "pixel" may be used with the same meaning and may be used interchangeably. Herein, a sample may represent a basic unit that constitutes a block.

Hereinafter, "inter" and "inter-screen" may be used with the same meaning and can be used interchangeably.

Hereinafter, "intra" and "in-screen" may be used with the same meaning and can be used interchangeably.

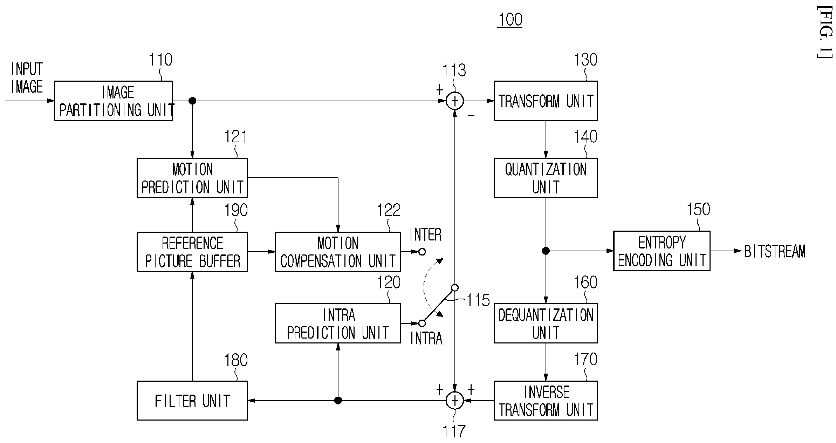

FIG. 1 is a block diagram showing a configuration of an encoding apparatus according to an embodiment of the present disclosure.

The encoding apparatus 100 may be an encoder, a video encoding apparatus, or an image encoding apparatus. A video may include one or more images. The encoding apparatus 100 may sequentially encode one or more images.

Referring to FIG. 1, the encoding apparatus 100 may include an image partitioning unit 110, an intra prediction unit 120, a motion prediction unit 121, a motion compensation unit 122, a switch 115, a subtractor 113, a transform unit 130, a quantization unit 140, an entropy encoding unit 150, a dequantization unit 160, an inverse transform unit 170, an adder 117, a filter unit 180 and a reference picture buffer 190.

In addition, the encoding apparatus 100 may generate a bitstream including information encoded through encoding of an input image, and output the generated bitstream. The generated bitstream may be stored in a computer-readable recording medium, or may be streamed through a wired/wireless transmission medium.

The image partitioning unit 110 may partition the input image into various forms to increase the efficiency of video encoding/decoding. That is, the input video is composed of multiple pictures, and one picture may be hierarchically partitioned and processed for compression efficiency, parallel processing, etc. For example, one picture may be partitioned into one or multiple tiles or slices, and then partitioned again into multiple CTUs (Coding Tree Units). Alternatively, one picture may first be partitioned into multiple sub-pictures defined as groups of rectangular slices, and each sub-picture may be partitioned into the tiles/slices. Here, the sub-picture may be utilized to support the function of partially independently encoding/decoding and transmitting the picture. Since multiple sub-pictures may be individually reconstructed, it has the advantage of easy editing in applications that configure multi-channel inputs into one picture. In addition, a tile may be divided horizontally to generate bricks. Here, the brick may be utilized as the basic unit of parallel processing within the picture. In addition, one CTU may be recursively partitioned into quad trees (QTs), and the terminal node of the partition may be defined as a CU (Coding Unit). The CU may be partitioned into a PU (Prediction Unit), which is a prediction unit, and a TU (Transform Unit), which is a transform unit, to perform prediction and partition. Meanwhile, the CU may be utilized as the prediction unit and/or the transform unit itself. Here, for flexible partition, each CTU may be recursively partitioned into multi-type trees (MTTs) as well as quad trees (QTs). The partition of the CTU into multi-type trees may start from the terminal node of the QT, and the MTT may be composed of a binary tree (BT) and a triple tree (TT). For example, the MTT structure may be classified into a vertical binary split mode (SPLIT_BT_VER), a horizontal binary split mode (SPLIT_BT_HOR), a vertical ternary split mode (SPLIT_TT_VER), and a horizontal ternary split mode (SPLIT_TT_HOR). In addition, a minimum block size (MinQTSize) of the quad tree of the luma block during partition may be set to 16x16, a maximum block size (MaxBtSize) of the binary tree may be set to 128x128, and a maximum block size (MaxTtSize) of the triple tree may be set to 64x64. In addition, a minimum block size (MinBtSize) of the binary tree and a minimum block size (MinTtSize) of the triple tree may be specified as 4x4, and the maximum depth (MaxMttDepth) of the multi-type tree may be specified as 4. In addition, in order to increase the encoding efficiency of the I slice, a dual tree that differently uses CTU partition structures of luma and chroma components may be applied. On the other hand, in P and B slices, the luma and chroma CTBs (Coding Tree Blocks) within the CTU may be partitioned into a single tree that shares the coding tree structure.

The encoding apparatus 100 may perform encoding on the input image in the intra mode and/or the inter mode. Alternatively, the encoding apparatus 100 may perform encoding on the input image in a third mode (e.g., IBC mode, Palette mode, etc.) other than the intra mode and the inter mode. However, if the third mode has functional characteristics similar to the intra mode or the inter mode, it may be classified as the intra mode or the inter mode for convenience of explanation. In the present disclosure, the third mode will be classified and described separately only when a specific description thereof is required.

When the intra mode is used as the prediction mode, the switch 115 may be switched to intra, and when the inter mode is used as the prediction mode, the switch 115 may be switched to inter. Here, the intra mode may mean an intra prediction mode, and the inter mode may mean an inter prediction mode. The encoding apparatus 100 may generate a prediction block for an input block of the input image. In addition, the encoding apparatus 100 may encode a residual block using a residual of the input block and the prediction block after the prediction block is generated. The input image may be referred to as a current image which is a current encoding target. The input block may be referred to as a current block which is a current encoding target or an encoding target block.

When a prediction mode is an intra mode, the intra prediction unit 120 may use a sample of a block that has been already encoded/decoded around a current block as a reference sample. The intra prediction unit 120 may perform spatial prediction for the current block by using the reference sample, or generate prediction samples of an input block through spatial prediction. Herein, the intra prediction may mean in-screen prediction.

As an intra prediction method, non-directional prediction modes such as DC mode and Planar mode and directional prediction modes (e.g., 65 directions) may be applied. Here, the intra prediction method may be expressed as an intra prediction mode or an in-screen prediction mode.

When a prediction mode is an inter mode, the motion prediction unit 121 may retrieve a region that best matches with an input block from a reference image in a motion prediction process, and derive a motion vector by using the retrieved region. In this case, a search region may be used as the region. The reference image may be stored in the reference picture buffer 190. Here, when encoding/decoding for the reference image is performed, it may be stored in the reference picture buffer 190.

The motion compensation unit 122 may generate a prediction block of the current block by performing motion compensation using a motion vector. Herein, inter prediction may mean inter-screen prediction or motion compensation.

When the value of the motion vector is not an integer, the motion prediction unit 121 and the motion compensation unit 122 may generate the prediction block by applying an interpolation filter to a partial region of the reference picture. In order to perform inter prediction or motion compensation, it may be determined whether the motion prediction and motion compensation mode of the prediction unit included in the coding unit is one of a skip mode, a merge mode, an advanced motion vector prediction (AMVP) mode, and an intra block copy (IBC) mode based on the coding unit and inter prediction or motion compensation may be performed according to each mode.

In addition, based on the above inter prediction method, an AFFINE mode of sub-PU based prediction, an SbTMVP (Subblock-based Temporal Motion Vector Prediction) mode, an MMVD (Merge with MVD) mode of PU-based prediction, and a GPM (Geometric Partitioning Mode) mode may be applied. In addition, in order to improve the performance of each mode, HMVP (History based MVP), PAMVP (Pairwise Average MVP), CIIP (Combined Intra/Inter Prediction), AMVR (Adaptive Motion Vector Resolution), BDOF (Bi-Directional Optical-Flow), BCW (Bi-predictive with CU Weights), LIC (Local Illumination Compensation), TM (Template Matching), OBMC (Overlapped Block Motion Compensation), etc. may be applied.

The subtractor 113 may generate a residual block by using a difference between an input block and a prediction block. The residual block may be called a residual signal. The residual signal may mean a difference between an original signal and a prediction signal. Alternatively, the residual signal may be a signal generated by transforming or quantizing, or transforming and quantizing a difference between the original signal and the prediction signal. The residual block may be a residual signal of a block unit.

The transform unit 130 may generate a transform coefficient by performing transform on a residual block, and output the generated transform coefficient. Herein, the transform coefficient may be a coefficient value generated by performing transform on the residual block. When a transform skip mode is applied, the transform unit 130 may skip transform of the residual block.

A quantized level may be generated by applying quantization to the transform coefficient or to the residual signal. Hereinafter, the quantized level may also be called a transform coefficient in embodiments.

For example, a 4x4 luma residual block generated through intra prediction is transformed using a base vector based on DST (Discrete Sine Transform), and transform may be performed on the remaining residual block using a base vector based on DCT (Discrete Cosine Transform). In addition, a transform block is partitioned into a quad tree shape for one block using RQT (Residual Quad Tree) technology, and after performing transform and quantization on each transformed block partitioned through RQT, a coded block flag (cbf) may be transmitted to increase encoding efficiency when all coefficients become 0.

As another alternative, the Multiple Transform Selection (MTS) technique, which selectively uses multiple transform bases to perform transform, may be applied. That is, instead of partitioning a CU into TUs through RQT, a function similar to TU partition may be performed through the subblock Transform (SBT) technique. Specifically, SBT is applied only to inter prediction blocks, and unlike RQT, the current block may be partitioned into ½ or ¼ sizes in the vertical or horizontal direction and then transform may be performed on only one of the blocks. For example, if it is partitioned vertically, transform may be performed on the leftmost or rightmost block, and if it is partitioned horizontally, transform may be performed on the topmost or bottommost block.

In addition, LFNST (Low Frequency Non-Separable Transform), a secondary transform technique that additionally transforms the residual signal transformed into the frequency domain through DCT or DST, may be applied. LFNST additionally performs transform on the low-frequency region of 4x4 or 8x8 in the upper left, so that the residual coefficients may be concentrated in the upper left.

The quantization unit 140 may generate a quantized level by quantizing the transform coefficient or the residual signal according to a quantization parameter (QP), and output the generated quantized level. Herein, the quantization unit 140 may quantize the transform coefficient by using a quantization matrix.

For example, a quantizer using QP values of 0 to 51 may be used. Alternatively, if the image size is larger and high encoding efficiency is required, the QP of 0 to 63 may be used. Also, a DQ (Dependent Quantization) method using two quantizers instead of one quantizer may be applied. DQ performs quantization using two quantizers (e.g., Q0 and Q1), but even without signaling information about the use of a specific quantizer, the quantizer to be used for the next transform coefficient may be selected based on the current state through a state transition model.

The entropy encoding unit 150 may generate a bitstream by performing entropy encoding according to a probability distribution on values calculated by the quantization unit 140 or on coding parameter values calculated when performing encoding, and output the bitstream. The entropy encoding unit 150 may perform entropy encoding of information on a sample of an image and information for decoding an image. For example, the information for decoding the image may include a syntax element.

When entropy encoding is applied, symbols are represented so that a smaller number of bits are assigned to a symbol having a high occurrence probability and a larger number of bits are assigned to a symbol having a low occurrence probability, and thus, the size of bit stream for symbols to be encoded may be decreased. The entropy encoding unit 150 may use an encoding method, such as exponential Golomb, context-adaptive variable length coding (CAVLC), context-adaptive binary arithmetic coding (CABAC), etc., for entropy encoding. For example, the entropy encoding unit 150 may perform entropy encoding by using a variable length coding/code (VLC) table. In addition, the entropy encoding unit 150 may derive a binarization method of a target symbol and a probability model of a target symbol/bin, and perform arithmetic coding by using the derived binarization method, and a context model.

In relation to this, when applying CABAC, in order to reduce the size of the probability table stored in the decoding apparatus, a table probability update method may be changed to a table update method using a simple equation and applied. In addition, two different probability models may be used to obtain more accurate symbol probability values.

In order to encode a transform coefficient level (quantized level), the entropy encoding unit 150 may change a two-dimensional block form coefficient into a one-dimensional vector form through a transform coefficient scanning method.

A coding parameter may include information (flag, index, etc.) encoded in the encoding apparatus 100 and signaled to the decoding apparatus 200, such as syntax element, and information derived in the encoding or decoding process, and may mean information required when encoding or decoding an image.

Herein, signaling the flag or index may mean that a corresponding flag or index is entropy encoded and included in a bitstream in an encoder, and may mean that the corresponding flag or index is entropy decoded from a bitstream in a decoder.

The encoded current image may be used as a reference image for another image to be processed later. Therefore, the encoding apparatus 100 may reconstruct or decode the encoded current image again and store the reconstructed or decoded image as a reference image in the reference picture buffer 190.

A quantized level may be dequantized in the dequantization unit 160, or may be inversely transformed in the inverse transform unit 170. A dequantized and/or inversely transformed coefficient may be added with a prediction block through the adder 117. Herein, the dequantized and/or inversely transformed coefficient may mean a coefficient on which at least one of dequantization and inverse transform is performed, and may mean a reconstructed residual block. The dequantization unit 160 and the inverse transform unit 170 may be performed as an inverse process of the quantization unit 140 and the transform unit 130.

The reconstructed block may pass through the filter unit 180. The filter unit 180 may apply a deblocking filter, a sample adaptive offset (SAO), an adaptive loop filter (ALF), a bilateral filter (BIF), luma mapping with chroma scaling (LMCS), etc. to a reconstructed sample, a reconstructed block or a reconstructed image using all or some filtering techniques. The filter unit 180 may be called an in-loop filter. In this case, the in-loop filter is also used as name excluding LMCS.

The deblocking filter may remove block distortion generated in boundaries between blocks. In order to determine whether or not to apply a deblocking filter, whether or not to apply a deblocking filter to a current block may be determined based on samples included in several rows or columns which are included in the block. When a deblocking filter is applied to a block, a different filter may be applied according to a required deblocking filtering strength.

In order to compensate for encoding error using sample adaptive offset, a proper offset value may be added to a sample value. The sample adaptive offset may correct an offset of a deblocked image from an original image by a sample unit. A method of partitioning a sample included in an image into a predetermined number of regions, determining a region to which an offset is applied, and applying the offset to the determined region, or a method of applying an offset in consideration of edge information on each sample may be used.

A bilateral filter (BIF) may also correct the offset from the original image on a sample-by-sample basis for the image on which deblocking has been performed.

The adaptive loop filter may perform filtering based on a comparison result of the reconstructed image and the original image. Samples included in an image may be partitioned into predetermined groups, a filter to be applied to each group may be determined, and differential filtering may be performed for each group. Information of whether or not to apply the ALF may be signaled by coding units (CUs), and a form and coefficient of the adaptive loop filter to be applied to each block may vary.

In LMCS (Luma Mapping with Chroma Scaling), luma mapping (LM) means remapping luma values through a piece-wise linear model, and chroma scaling (CS) means a technique for scaling the residual value of the chroma component according to the average luma value of the prediction signal. In particular, LMCS may be utilized as an HDR correction technique that reflects the characteristics of HDR (High Dynamic Range) images.

The reconstructed block or the reconstructed image having passed through the filter unit 180 may be stored in the reference picture buffer 190. A reconstructed block that has passed through the filter unit 180 may be a part of a reference image. That is, the reference image is a reconstructed image composed of reconstructed blocks that have passed through the filter unit 180. The stored reference image may be used later in inter prediction or motion compensation.

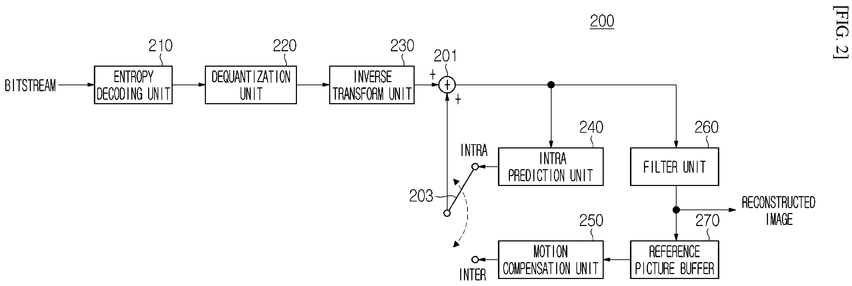

FIG. 2 is a block diagram showing a configuration of a decoding apparatus according to an embodiment of the present disclosure.

A decoding apparatus 200 may a decoder, a video decoding apparatus, or an image decoding apparatus.

Referring to FIG. 2, the decoding apparatus 200 may include an entropy decoding unit 210, a dequantization unit 220, an inverse transform unit 230, an intra prediction unit 240, a motion compensation unit 250, an adder 201, a switch 203, a filter unit 260, and a reference picture buffer 270.

The decoding apparatus 200 may receive a bitstream output from the encoding apparatus 100. The decoding apparatus 200 may receive a bitstream stored in a computer-readable recording medium, or may receive a bitstream that is streamed through a wired/wireless transmission medium. The decoding apparatus 200 may decode the bitstream in an intra mode or an inter mode. In addition, the decoding apparatus 200 may generate a reconstructed image generated through decoding or a decoded image, and output the reconstructed image or decoded image.

When a prediction mode used for decoding is an intra mode, the switch 203 may be switched to intra. Alternatively, when a prediction mode used for decoding is an inter mode, the switch 203 may be switched to inter.

The decoding apparatus 200 may obtain a reconstructed residual block by decoding the input bitstream, and generate a prediction block. When the reconstructed residual block and the prediction block are obtained, the decoding apparatus 200 may generate a reconstructed block that becomes a decoding target by adding the reconstructed residual block and the prediction block. The decoding target block may be called a current block.

The entropy decoding unit 210 may generate symbols by entropy decoding the bitstream according to a probability distribution. The generated symbols may include a symbol of a quantized level form. Herein, an entropy decoding method may be an inverse process of the entropy encoding method described above.

The entropy decoding unit 210 may change a one-dimensional vector-shaped coefficient into a two-dimensional block-shaped coefficient through a transform coefficient scanning method to decode a transform coefficient level (quantized level).

A quantized level may be dequantized in the dequantization unit 220, or inversely transformed in the inverse transform unit 230. The quantized level may be a result of dequantization and/or inverse transform, and may be generated as a reconstructed residual block. Herein, the dequantization unit 220 may apply a quantization matrix to the quantized level. The dequantization unit 220 and the inverse transform unit 230 applied to the decoding apparatus may apply the same technology as the dequantization unit 160 and inverse transform unit 170 applied to the aforementioned encoding apparatus.

When an intra mode is used, the intra prediction unit 240 may generate a prediction block by performing, on the current block, spatial prediction that uses a sample value of a block which has been already decoded around a decoding target block. The intra prediction unit 240 applied to the decoding apparatus may apply the same technology as the intra prediction unit 120 applied to the aforementioned encoding apparatus.

When an inter mode is used, the motion compensation unit 250 may generate a prediction block by performing, on the current block, motion compensation that uses a motion vector and a reference image stored in the reference picture buffer 270. The motion compensation unit 250 may generate a prediction block by applying an interpolation filter to a partial region within a reference image when the value of the motion vector is not an integer value. In order to perform motion compensation, it may be determined whether the motion compensation method of the prediction unit included in the corresponding coding unit is a skip mode, a merge mode, an AMVP mode, or a current picture reference mode based on the coding unit, and motion compensation may be performed according to each mode. The motion compensation unit 250 applied to the decoding apparatus may apply the same technology as the motion compensation unit 122 applied to the encoding apparatus described above.

The adder 201 may generate a reconstructed block by adding the reconstructed residual block and the prediction block. The filter unit 260 may apply at least one of inverse-LMCS, a deblocking filter, a sample adaptive offset, and an adaptive loop filter to the reconstructed block or reconstructed image. The filter unit 260 applied to the decoding apparatus may apply the same filtering technology as that applied to the filter unit 180 applied to the aforementioned encoding apparatus.

The filter unit 260 may output the reconstructed image. The reconstructed block or reconstructed image may be stored in the reference picture buffer 270 and used for inter prediction. A reconstructed block that has passed through the filter unit 260 may be a part of a reference image. That is, a reference image may be a reconstructed image composed of reconstructed blocks that have passed through the filter unit 260. The stored reference image may be used later in inter prediction or motion compensation.

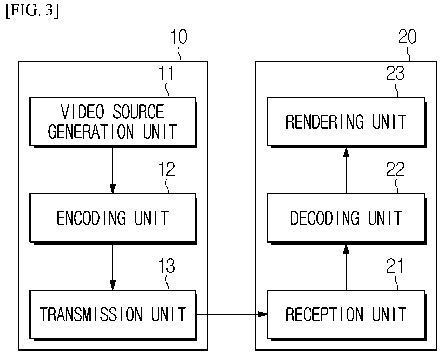

FIG. 3 is a diagram schematically showing a video coding system to which the present disclosure is applicable.

A video coding system according to an embodiment may include an encoding apparatus 10 and a decoding apparatus 20. The encoding apparatus 10 may transmit encoded video and/or image information or data to the decoding apparatus 20 in the form of a file or streaming through a digital storage medium or a network.

The encoding apparatus 10 according to an embodiment may include a video source generation unit 11, an encoding unit 12, and a transmission unit 13. The decoding apparatus 20 according to an embodiment may include a reception unit 21, a decoding unit 22, and a rendering unit 23. The encoding unit 12 may be called a video/image encoding unit, and the decoding unit 22 may be called a video/image decoding unit. The transmission unit 13 may be included in the encoding unit 12. The reception unit 21 may be included in the decoding unit 22. The rendering unit 23 may include a display unit, and the display unit may be configured as a separate device or an external component.

The video source generation unit 11 may obtain the video/image through a process of capturing, synthesizing, or generating the video/image. The video source generation unit 11 may include a video/image capture device and/or a video/image generation device. The video/image capture device may include, for example, one or more cameras, a video/image archive including previously captured video/image, etc. The video/image generation device may include, for example, a computer, a tablet, and a smartphone, etc., and may (electronically) generate the video/image. For example, a virtual video/image may be generated through a computer, etc., in which case the video/image capture process may be replaced with a process of generating related data.

The encoding unit 12 may encode the input video/image. The encoding unit 12 may perform a series of procedures such as prediction, transform, and quantization for compression and encoding efficiency. The encoding unit 12 may output encoded data (encoded video/image information) in the form of a bitstream. The detailed configuration of the encoding unit 12 may also be configured in the same manner as the encoding apparatus 100 of FIG. 1 described above.

The transmission unit 13 may transmit encoded video/image information or data output in the form of a bitstream to the reception unit 21 of the decoding apparatus 20 through a digital storage medium or a network in the form of a file or streaming. The digital storage medium may include various storage media such as USB, SD, CD, DVD, Blu-ray, HDD, SSD, etc. The transmission unit 13 may include an element for generating a media file through a predetermined file format and may include an element for transmission through a broadcasting/communication network. The reception unit 21 may extract/receive the bitstream from the storage medium or the network and transmit it to the decoding unit 22.

The decoding unit 22 may decode the video/image by performing a series of procedures such as dequantization, inverse transform, and prediction corresponding to the operation of the encoding unit 12. The detailed configuration of the decoding unit 22 may also be configured in the same manner as the above-described decoding apparatus 200 of FIG. 2.

The rendering unit 23 may render the decoded video/image. The rendered video/image may be displayed through the display unit.

The present disclosure describes a method of improving a bidirectional optical flow (BDOF) technique applied to bidirectional inter prediction. According to the bidirectional inter prediction technique, a final prediction block is determined by a weighted combination of two already encoded prediction blocks present in reference pictures in different directions relative to a current picture. Two motion vectors (MV) are used to obtain two prediction blocks each from past reference pictures (list 0, L0) and future reference pictures (list 1, L1) in playback order. Although bidirectional inter prediction provides high coding performance, due to the limitations of block-based motion compensation (MC), small displacement may remain between samples within two prediction blocks.

This residual small displacement may be compensated using bi-directional optical flow (BDOF) technology. According to the BDOF technique, the change in pixels within a bidirectional prediction block is estimated based on the optical flow differential equation. In addition, the refinement value of the prediction sample of the prediction block is determined based on the change in pixels within the bidirectional prediction block.

BDOF is designed based on the assumption that the movement of any object has a constant speed. According to one embodiment, BDOF may be configured to be applied only when the distances between two reference pictures and the current picture, that is, the difference in the picture order count (POC) between the two reference pictures and the current picture, is the same. Here, POC is the serial number of pictures according to the playback order. Also, according to one embodiment, BDOF may be applied in block units of 4x4, 8x8, and 16x16. Also, BDOF may be applied in sample units.

In addition, BDOF may be performed two or more times from the upper block to the lower block. For example, BDOF may be performed primarily for a 16x16 sub-block, secondarily for an 8x8 sub-block, and thirdly for a 4x4 sub-block. Also, it may be performed primarily for an 8x8 sub-block and secondly for a 4x4 sub-block. The embodiments of BDOF described below may be applied to all order of BDOF distinguished by the size of the sub-block.

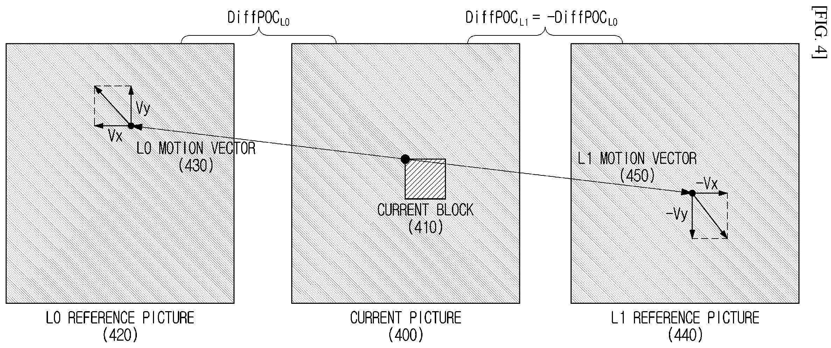

FIG. 4 illustrates an embodiment of a motion vector refinement method according to a BDOF technique when distances between two reference pictures and a current picture are the same. FIG. 4 illustrates a current picture 400, an L0 reference picture 420, and an L1 reference picture 440. Bidirectional inter prediction is applied to a current block 410 of the current picture 400, and the current block 410 is predicted by the L0 motion vector 430 and the L1 motion vector 450. Here, the absolute values of a POC difference DiffPOC_{L0} between the current picture 400 and the L0 reference picture 420 and a POC difference DiffPOC_{L1} between the current picture 400 and the L1 reference picture 440 are the same. Here, according to the BDOF technique, residual small displacements (vₓ, v_{y}) and (-vₓ, -v_{y}) may be calculated by minimizing the difference values between the L0 and L1 prediction samples for each sub-block with an arbitrary size. Accordingly, the prediction block of the current block 410 may be refined based on a BDOF offset calculated from the residual small displacement according to the BDOF technique.

For example, horizontal and vertical gradients of the L0 and L1 prediction samples are calculated first. The horizontal and vertical gradients may be calculated based on a difference between any number of neighboring samples located around a prediction sample (i, j). Next, the auto-correlation and cross-correlation of the horizontal and vertical gradients are calculated. In addition, the residual small displacement (vx, vy) is derived using the correlations. Assuming that any object has a constant speed, the residual small displacement of the L1 reference picture is determined to be (-vₓ, v_{y}). The residual small displacement may be determined in units of samples or in units of blocks with an arbitrary size while moving a window with an arbitrary size. Based on the gradients and residual small displacement, a BDOF offset for correcting the prediction samples is calculated.

As shown in Equation 1, a refined prediction sample value (final prediction sample or final prediction block) may be obtained by adding a BDOF offset σ_{BDOF} to the prediction value (prediction sample or prediction block) of the existing bidirectional prediction. In Equation 1, pred_{L0} and pred_{L1} represent prediction samples or prediction blocks from L0 and L1, respectively, and o and s represent the offset and shift values, respectively, for normalizing the final prediction value in the existing bidirectional prediction. [Equation 1] $pred = \left({pred}_{L 0}+{pred}_{L 1}+{σ}_{BDOF}+o\right) ≫ s$

According to one embodiment, based on the assumption that the object moves at a constant speed and in a constant direction, BDOF may be set to be performed only when a distance between the current picture and the reference picture from L0 (=DiffPOC_{L0}) and a distance between the current picture and the reference picture from L1 (=DiffPOC_{L1}) are the same. However, the speed of the unit object may change every hour in the real world.

However, due to various factors, two reference blocks for the current block's bi-prediction may not always be at the same distance from each other. Therefore, BDOF may be configured to be performed even when DiffPOC_{L0} and DiffPOC_{L1} are different.

In particular, the decoder-side motion vector refinement (DMVR), which performs motion prediction by refining the motion information of neighboring blocks on the decoder side, may be configured to be performed not only when DiffPOC_{L0} and DiffPOC_{L1} are the same but also when they are different. Therefore, both DMVR and BDOF may be applied not only when DiffPOC_{L0} and DiffPOC_{L1} are the same but also when they are different.

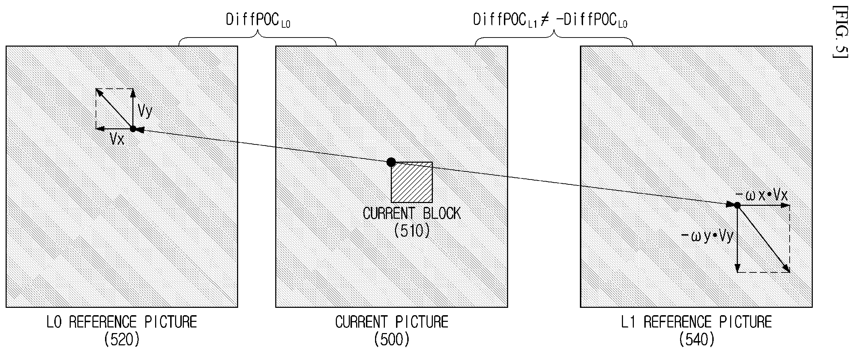

FIG. 5 illustrates an embodiment of a motion vector refinement method according to a BDOF technique when distances between two reference pictures and a current picture are not the same. Unlike FIG. 4, in FIG. 5, absolute values of a difference in POC DiffPOC_{L0} between a current picture 500 and a L0 reference picture 520 and a difference in POC DiffPOC_{L1} between the current picture 500 and a L1 reference picture 540 are different. Therefore, a small displacement (vₓ, v_{y}) applied to the L0 reference picture 520 and a small displacement (-ωₓvₓ, -ω_{y}v_{y}) applied to the L1 reference picture 540 maybe calculated to have different magnitudes.

For example, the autocorrelation and cross-correlation of the horizontal and vertical gradients for LX (X = 0 or 1) are calculated. In addition, a residual small displacement (vₓ, v_{y}) is derived using the autocorrelation and cross-correlation. Next, the residual small displacement for LY (Y = 1 - X) may be determined to be (-ωₓvₓ, -ω_{y}v_{y}). Here, L0 and L1 represent a first reference picture list and a second reference picture list. In addition, a BDOF offset is determined using the residual small displacement and the horizontal and vertical gradients of L0 and L1.

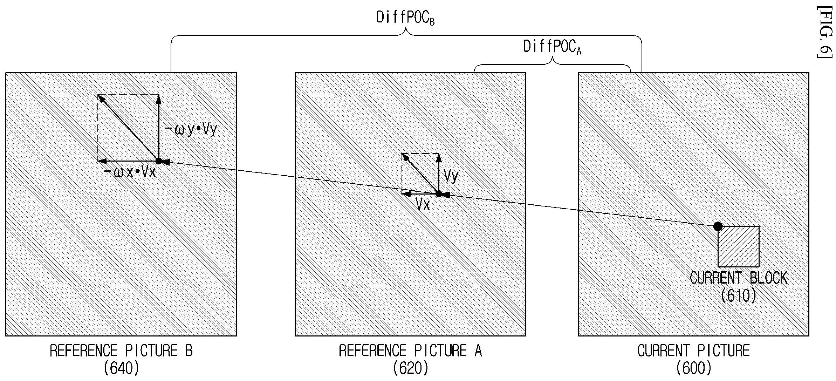

FIG. 6 illustrates an embodiment of a motion vector refinement method according to a BDOF technique when two reference pictures referenced by a current picture are in the same temporal direction from the current picture. According to FIG. 6, both reference picture A 620 and reference picture B 640 are located temporally earlier than a current picture 600. In addition, the absolute values of a difference in POC DiffPOC_{A} between the current picture 600 and reference picture A 620 and a difference in POC DiffPOC_{B} between the current picture 600 and reference picture B 640 are different. At this time, as in FIG. 5, a small displacement (vₓ, v_{y}) applied to reference picture A 620 and the small displacement (-ωₓvₓ, -ω_{y}v_{y}) applied to reference picture B 640 may be calculated to have different magnitudes.

For example, the autocorrelation and cross-correlation of the horizontal and vertical gradients for reference picture A are calculated. In addition, the residual small displacement (vₓ, v_{y}) is derived using the autocorrelation and cross-correlation. Next, a residual small displacement for reference picture B, which is in the same temporal direction as reference picture A, may be determined to be (-ωₓvₓ, - ω_{y}v_{y}). In addition, a BDOF offset is determined using the residual small displacement and the horizontal and vertical gradients of L0 and L1. Reference pictures A and B may be reference pictures included in reference picture lists L0 and L1, respectively. Alternatively, reference pictures A and B may both be included in either reference picture list L0 or L1.

The weights ωₓ and ω_{y} used to determine the residual small displacement in the embodiments described above are arbitrary real numbers and may be determined in one of the following methods.

According to one embodiment, both weights ωₓ and ω_{y} may be determined to be 1. That is, the residual small displacement may be determined to be (-vₓ, -v_{y}). Alternatively, according to one embodiment, a specific value predetermined in the encoder/decoder may be used as the weight.

As shown in FIG. 5, when the directions of the reference pictures are different, weights ωₓ and ω_{y} may be calculated using the distance between the current picture and the LX (X=0 or 1) reference picture (=DiffPOC_{LX}), the distance between the current picture and the LY (Y=1-X) reference picture (=DiffPOC_{LY}), or the ratio thereof. If weights ωₓ or/and ω_{y} are greater than 1, more refinement is performed on the motion vector for the LY reference picture compared to the motion vector for the LX reference picture. Conversely, if weights ωₓ or/and ω_{y} are less than 1, it means that less refinement is performed on the motion vector for the LY reference picture compared to the motion vector for the LX reference picture.

As shown in FIG. 6, when the directions of the reference pictures are the same, weights ωₓ and ω_{y} may be calculated using the distance between the current picture and the reference picture from reference picture A (=DiffPOC_{A}), the distance between the current picture and the reference picture reference picture B (=DiffPOC_{B}), or the ratio thereof. If weights ωₓ or/and ω_{y} are greater than 1, it means that more refinement is performed on the motion vector for reference picture B compared to the motion vector for reference picture A. Conversely, if weights ωₓ or/and ω_{y} are less than 1, it means that less refinement is performed on the motion vector for reference picture B compared to the motion vector for reference picture A.

The weights ωₓ and ω_{y} may be calculated or derived from some or all of the information of the current/neighboring blocks. For example, ωₓ and ω_{y} may be derived from the syntax elements of the inter prediction of the current block. Or, ωₓ and ω_{y} may be extracted from one of the neighboring blocks of the current block and used to determine the ωₓ and ω_{y} values of the current block.

Weights ωₓ and ω_{y} may be determined/calculated based on image/picture/block related information (e.g., resolution, frames per second (fps), GOP, coding configuration, slice type, quantization parameters, etc.).

The weights ωₓ and ω_{y} may be determined from syntax elements that explicitly indicate weights ωₓ and ω_{y}. The syntax elements may be signaled at one or more levels, such as sequences/pictures/slices/blocks.

The weights ωₓ and ω_{y} may be determined to be equal to the weights used in the coding technique (e.g., DMVR) performed prior to BDOF. Alternatively, the weights ωₓ and ω_{y} may be determined by adjusting the weights used in the coding technique performed prior to BDOF.

A BDOF offset for correcting a prediction sample may be calculated based on the residual small displacement and gradient calculated by the method described above. In addition, the prediction sample or prediction block may be refined by adding the calculated BDOF offset to the prediction sample or prediction block obtained by bidirectional prediction.

As previously explained, applying BDOF regardless of the distance between the reference pictures and the current picture can improve coding efficiency in bidirectional prediction by correcting more prediction blocks obtained by bidirectional prediction with BDOF. Additionally, since DMVR is applied regardless of the distance between the reference pictures and the current picture, BDOF and DMVR may be combined and applied to the bidirectional prediction of blocks.

In the present disclosure, an example of a method of adaptively calculating a residual small displacement when applying BDOF is described. Hereinafter, an adaptive BDOF technique that considers distances between the current picture and reference pictures will be described. In addition, an adaptive BDOF technique according to the adaptive DMVR technique will be described. Furthermore, an adaptive BDOF that considers picture/slice boundaries will be described.

According to one embodiment, as shown in FIG. 5, when the distances between the current picture 500 and the reference pictures 520 and 540 are different, an adaptive BDOF may be performed by taking into account the distances between the current picture 500 and the reference pictures 520 and 540. A residual small displacement for L1 may be determined based on the residual small displacement (vₓ, v_{y}) and weights ωₓ and ω_{y} for L0. However, if the ratio of the distance between the current picture 500 and the L1 reference picture 540 (=DiffPOC_{L1}) and the distance between the current picture 500 and the L0 reference picture 520 (=DiffPOC_{L0}) is greater than a predetermined value, or if DiffPOCL1 is greater than an arbitrary threshold value, the prediction accuracy may be reduced when correcting the motion information corresponding to L1 based on the residual small displacement.

Thus, if DiffPOC_{L1} > c x DiffPOC_{L0}, or if DiffPOC_{L1} > Th, the BDOF offset may be calculated based on the gradient and residual small displacement of the L0 reference picture 520 without considering the gradient and residual small displacement of the L1 reference picture 540. Conversely, if DiffPOC_{L0} > c x DiffPOC_{L1}, or if DiffPOC_{L0} > Th, the BDOF offset may be calculated based on the gradient and residual small displacement of the L1 reference picture 540 without considering the gradient and residual small displacement of the L0 reference picture 520. Here, c and Th are arbitrary positive integers.

Therefore, by calculating the BDOF offset based on the gradient and residual small displacement of a reference picture with high reliability, the encoding efficiency of the BDOF can be improved.

According to one embodiment, a method of applying an adaptive BDOF technique is described depending on whether the motion vector of the L0 or L1 reference picture is refined in the adaptive DMVR technique. Adaptive DMVR is a technique that corrects motion information in only one direction LX (X = 0 or 1) of bidirectional prediction for merge candidates that satisfy the DMVR condition. If adaptive DMVR is performed, it is reasonable to perform refinement in only one direction of bidirectional prediction in the subsequent BDOF as well.

Therefore, if motion information is refined only for L0 in the adaptive DMVR, the BDOF offset may be calculated based on the gradient and residual small displacement of the L0 reference picture without considering the gradient and residual small displacement of the L1 reference picture. Conversely, if motion information is refined only for L1 in the adaptive DMVR, the BDOF offset may be calculated based on the gradient and residual small displacement of the L1 reference picture without considering the gradient and residual small displacement of the L0 reference picture.

This embodiment combining the adaptive DMVR technique and the adaptive BDOF technique can be applied not only when the distances between the current picture and the reference pictures are different, but also when the distances between the current picture and the reference pictures are the same.

According to one embodiment, an adaptive BDOF that takes into account picture boundaries and/or slice boundaries is described. When applying residual small displacement calculated for LX (X = 0 or 1) in the BDOF, the position indicated by the residual small displacement may be outside the picture/slice boundary. In this case, for the accuracy of motion vector refinement, residual small displacement may not be taken into account for the LX reference picture. Thus, the BDOF offset may be calculated by taking into account residual small displacement only for LY (Y = 1 - X) and not taking into account residual small displacement for the LX reference picture. For example, if the position according to the residual small displacement for L0 is outside the picture/slice boundary, only the residual small displacement corresponding to the L1 reference picture may be used in the BDOF offset calculation. Conversely, if the position based on the residual small displacement for L1 is outside the picture/slice boundary, only the residual small displacement corresponding to the L01 reference picture may be used in the BDOF offset calculation.

This embodiment combining the adaptive DMVR technique and the adaptive BDOF technique can be applied not only when the distances between the current picture and the reference pictures are different, but also when the distances between the current picture and the reference pictures are the same.

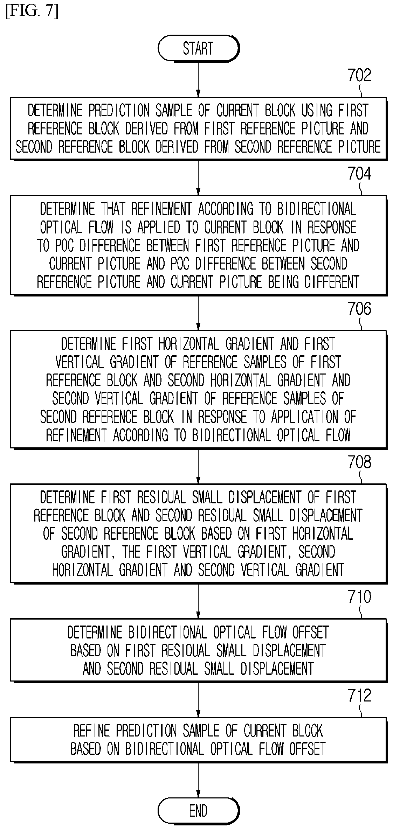

FIG. 7 illustrates an embodiment of a motion vector refinement method according to a BDOF technique.

In step 702, a prediction sample of a current block is determined using a first reference block derived from a first reference picture and a second reference block derived from a second reference picture. If bi-prediction is applied to the current block, the prediction sample of the current block may be determined from two reference pictures. The first reference picture and the second reference picture are reference pictures selected from the first reference picture list and the second reference picture list, respectively.

The first reference picture list and the second reference picture list are List0 and List1, respectively, or vice versa. List0 preferentially contains a preceding reference picture that is chronologically earlier than the current picture. In addition, if the slots of List0 are not fully filled with only the preceding reference picture, List0 may contain a succeeding reference picture that is chronologically later than the current picture. List1 preferentially contains a succeeding reference picture that is chronologically later than the current picture. In addition, if the slots of List1 are not fully filled with only the succeeding reference picture, List1 may contain a preceding reference picture that is chronologically earlier than the current picture.

In step 704, it is determined that a refinement according to bidirectional optical flow is applied to the current block based on a temporal distance difference between the first reference picture and the current picture and a temporal distance difference between the second reference picture and the current picture. The temporal distance difference between the pictures may be a POC (Picture Order Count) difference. Here, POC represents the temporal playback order of the current picture.

According to one embodiment, it may be determined that the refinement according to bidirectional optical flow is applied to the current block only when the magnitudes of the temporal distance difference between the first reference picture and the current picture and the temporal distance difference between the second reference picture and the current picture are the same.

However, even if the magnitudes of the temporal distance difference between the first reference picture and the current picture and the temporal distance difference between the second reference picture and the current picture are different, it may be determined that the refinement according to bidirectional optical flow is applied to the current block.

According to one embodiment, it may be determined that the refinement according to bidirectional optical flow is applied to the current block only when the first reference picture and the second reference picture are in opposite temporal directions from the current picture.

However, even if the first reference picture and the second reference picture are in the same temporal direction from the current picture, it may be determined that the refinement according to bidirectional optical flow is applied to the current block.

In step 706, in response to the application of the refinement according to bidirectional optical flow, the first horizontal gradient and the first vertical gradient of the reference samples of the first reference block and the second horizontal gradient and the second vertical gradient of the reference samples of the second reference block are determined. The gradient represents the amount of change between adjacent samples. The horizontal gradient represents the amount of change between adjacent samples in the horizontal direction, and the vertical gradient represents the amount of change between adjacent samples in the vertical direction. Gradients may be calculated for samples adjacent to the reference blocks as well as for the reference samples included in the reference blocks. In addition, the gradients calculated for each sample are used to determine a residual small displacement.

In step 708, a first residual small displacement of the first reference block and a second residual small displacement of the second reference block are determined based on the first horizontal gradient, the first vertical gradient, the second horizontal gradient, and the second vertical gradient. Based on the first horizontal gradient, the first vertical gradient, the second horizontal gradient, and the second vertical gradient, the autocorrelation and cross-correlation between the gradients are calculated. In addition, based on the autocorrelation and cross-correlation, the first residual small displacement and the second residual small displacement are determined.

According to one embodiment, the second residual small displacement of the second reference block may be determined to be equal in magnitude to the first residual small displacement of the first reference block and opposite in direction.

According to one embodiment, the second residual small displacement of the second reference block may be determined by multiplying the first residual small displacement of the first reference block by a weight. The weight may include a horizontal weight for the horizontal component of the second residual small displacement and a vertical weight for the vertical component of the second residual small displacement. The horizontal weight and the vertical weight may be determined independently. Alternatively, the horizontal weight and the vertical weight may have the same value. Various embodiments for determining the weight will be described below.

According to one embodiment, the weight may be determined based on the temporal distance difference between the first reference picture and the current picture and the temporal distance difference between the second reference picture and the current picture. The magnitude of the weight may be determined based on the ratio of the magnitude of the temporal distance difference between the first reference picture and the current picture and the magnitude of the temporal distance difference between the second reference picture and the current picture. For example, the further the second reference picture is from the current picture, the greater the weight for the second reference picture may be determined. The sign of the weight may be determined based on the sign of the temporal distance difference between the first reference picture and the current picture and the sign of the temporal distance difference between the second reference picture and the current picture. For example, if the first reference picture and the second reference picture are located in the same temporal direction from the current picture (where the signs of the temporal distance differences are the same), the sign of the weight may be determined such that the first residual small displacement and the second residual small displacement indicate the same direction. Conversely, if the first reference picture and the second reference picture are located in opposite temporal directions from the current picture (where the signs of the temporal distance differences are different), the sign of the weight may be determined such that the first residual small displacement and the second residual small displacement indicate opposite directions.

According to one embodiment, the weight may be determined based on encoding information related to the current block. The encoding information related to the current block may include frames per second (fps) of the video, the resolution of the picture, the Group of Picture (GOP) included in the picture, the slice type of the slice, and quantization parameters.

According to one embodiment, the weight may be determined from weight information that explicitly indicates the weight. The weight information may be included in the slice header, picture header, picture parameter set, sequence parameter set, and video parameter set associated with the current block. Additionally, the weight information may be included in two or more of the listed data units. The weight may be determined by combining the weight information included in two or more data units. The weight information may represent any value within a predetermined range. Alternatively, the weight information may represent one of a predetermined number of weight candidates.

According to one embodiment, the weight may be derived from the weights of one or more adjacent blocks among the adjacent blocks of the current block.

According to one embodiment, the weight may be determined based on the weight information used for decoder-side motion vector refinement when decoder-side motion vector refinement is applied to the current block. The motion vector of the current block may be refined according to the decoder-side motion vector refinement technique. The motion vector refined according to the decoder-side motion vector refinement technique may be further refined according to the bidirectional optical flow technique. Considering the correlation between the weights used in the two refinement techniques, the weights used in the bidirectional optical flow technique may be derived from the weights used in the decoder-side motion vector refinement technique.

In step 710, a bidirectional optical flow offset is determined based on the first residual small displacement and the second residual small displacement. A first offset median value is determined from the first residual small displacement, the first horizontal gradient, and the first vertical gradient, and a second offset median value is determined from the second residual small displacement, the second horizontal gradient, and the second vertical gradient. In addition, a bidirectional optical flow offset is determined from the first offset median value and the second offset median value. Here, the first offset median value is a value for the first reference picture, and the second offset median value is a value for the second reference picture.

According to one embodiment, in the step of determining the bidirectional optical flow offset, the bidirectional optical flow offset may be adaptively determined by one of a first residual small displacement and a second residual small displacement. For example, if only the first residual small displacement is used, the bidirectional optical flow offset is determined from only the first offset median value.

According to one embodiment, when the ratio of the magnitude of the magnitude of the time distance difference between the second reference picture and the current picture to the magnitude of the time distance difference between the first reference picture and the current picture is greater than a predetermined threshold, the bidirectional optical flow offset may be determined based only on the first residual small displacement and not based on the second residual small displacement. For example, when the predetermined threshold is 2, when the time distance difference between the second reference picture and the current picture is greater than twice the time distance difference between the first reference picture and the current picture, the second residual small displacement corresponding to the second reference picture is not used to determine the bidirectional optical flow offset.

According to one embodiment, when the temporal distance difference between the second reference picture and the current picture is greater than the predetermined threshold, the bidirectional optical flow offset may be determined based only on the first residual small displacement, not based on the second residual small displacement. For example, when the predetermined threshold is 8, when the temporal distance difference between the second reference picture and the current picture is greater than 8, the second residual small displacement corresponding to the second reference picture is not used to determine the bidirectional optical flow offset.

According to one embodiment, when only the first motion vector among the first motion vector and the second motion vector of the current block is refined by the decoder-side motion vector refinement, the bidirectional optical flow offset may be determined based only on the first residual small displacement and not based on the second residual small displacement. The embodiment is based on the similarity that both the decoder-side motion vector refinement technique and the bidirectional optical flow technique are applied to the refinement of the motion vector.

According to one embodiment, if the position corresponding to the first motion vector of the current block and the first residual small displacement is within the picture boundary or slice boundary and the position corresponding to the second motion vector and the second residual small displacement is outside the picture boundary or slice boundary, the bidirectional optical flow offset may be determined based only on the first residual small displacement and not on the second residual small displacement. In the opposite case, the bidirectional optical flow offset may be determined based only on the second residual small displacement, not based on the first residual small displacement.

In step 712, the prediction sample of the current block is refined based on the bidirectional optical flow offset.

Depending on the prediction method performed in steps 702 to 712, the current block may be encoded or decoded. In some embodiments, first to third syntax elements are encoded in the encoder according to the prediction result. The information may be decoded in the decoder and used for block prediction.

In addition, a bitstream generated by the encoder according to the prediction method performed in steps 702 to 712 may be stored in a recording medium or transmitted to the outside of the encoder.

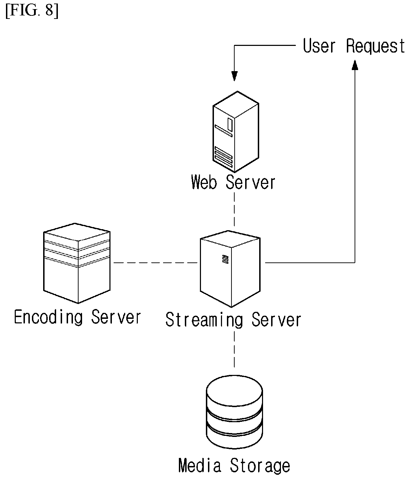

FIG. 8 exemplary illustrates a content streaming system to which an embodiment according to the present disclosure is applicable.

As illustrated in FIG. 8, a content streaming system to which an embodiment of the present disclosure is applied may largely include an encoding server, a streaming server, a web server, a media storage, a user device, and a multimedia input device.

The encoding server compresses content received from multimedia input devices such as smartphones, cameras, CCTVs, etc. into digital data to generate a bitstream and transmits it to the streaming server. As another example, if multimedia input devices such as smartphones, cameras, CCTVs, etc. directly generate a bitstream, the encoding server may be omitted.

The bitstream may be generated by an image encoding method and/or an image encoding apparatus to which an embodiment of the present disclosure is applied, and the streaming server may temporarily store the bitstream in the process of transmitting or receiving the bitstream.

The streaming server transmits multimedia data to a user device based on a user request via a web server, and the web server may act as an intermediary that informs the user of any available services. When a user requests a desired service from the web server, the web server transmits it to the streaming server, and the streaming server may transmit multimedia data to the user. At this time, the content streaming system may include a separate control server, and in this case, the control server may control commands/responses between devices within the content streaming system.

The streaming server may receive content from media storage and/or an encoding server. For example, when receiving content from the encoding server, the content may be received in real time. In this case, in order to provide a smooth streaming service, the streaming server may store the bitstream for a certain period of time.

Examples of the user devices may include mobile phones, smartphones, laptop computers, digital broadcasting terminals, personal digital assistants (PDAs), portable multimedia players (PMPs), navigation devices, slate PCs, tablet PCs, ultrabooks, wearable devices (e.g., smartwatches, smart glasses, HMDs), digital TVs, desktop computers, digital signage, etc.

Each server in the above content streaming system may be operated as a distributed server, in which case data received from each server may be distributed and processed.

The above embodiments may be performed in the same or corresponding manner in the encoding apparatus and the decoding apparatus. In addition, an image may be encoded/decoded using at least one or a combination of at least one of the above embodiments.

The order in which the above embodiments are applied may be different in the encoding apparatus and the decoding apparatus. Alternatively, the order in which the above embodiments are applied may be the same in the encoding apparatus and the decoding apparatus.

The above embodiments may be performed for each of the luma and chroma signals. Alternatively, the above embodiments for the luma and chroma signals may be performed identically.

In the above-described embodiments, the methods are described based on the flowcharts with a series of steps or units, but the present disclosure is not limited to the order of the steps, and rather, some steps may be performed simultaneously or in different order with other steps. In addition, it should be appreciated by one of ordinary skill in the art that the steps in the flowcharts do not exclude each other and that other steps may be added to the flowcharts or some of the steps may be deleted from the flowcharts without influencing the scope of the present disclosure.

The embodiments may be implemented in a form of program instructions, which are executable by various computer components, and recorded in a computer-readable recording medium. The computer-readable recording medium may include stand-alone or a combination of program instructions, data files, data structures, etc. The program instructions recorded in the computer-readable recording medium may be specially designed and constructed for the present disclosure, or well-known to a person of ordinary skill in the computer software technology field.

A bitstream generated by the encoding method according to the above embodiment may be stored in a non-transitory computer-readable recording medium. In addition, a bitstream stored in the non-transitory computer-readable recording medium may be decoded by the decoding method according to the above embodiment.

Examples of the computer-readable recording medium include magnetic recording media such as hard disks, floppy disks, and magnetic tapes; optical data storage media such as CD-ROMs or DVD-ROMs; magneto-optimum media such as floptical disks; and hardware devices, such as read-only memory (ROM), random-access memory (RAM), flash memory, etc., which are particularly structured to store and implement the program instruction. Examples of the program instructions include not only a mechanical language code formatted by a compiler but also a high-level language code that may be implemented by a computer using an interpreter. The hardware devices may be configured to be operated by one or more software modules or vice versa to conduct the processes according to the present disclosure.

Although the present disclosure has been described in terms of specific items such as detailed elements as well as the limited embodiments and the drawings, they are only provided to help more general understanding of the invention, and the present disclosure is not limited to the above embodiments. It will be appreciated by those skilled in the art to which the present disclosure pertains that various modifications and changes may be made from the above description.

Therefore, the spirit of the present disclosure shall not be limited to the above-described embodiments, and the entire scope of the appended claims and their equivalents will fall within the scope and spirit of the invention.

### Industrial Applicability

The present disclosure may be used in an apparatus for encoding/decoding an image and a recording medium for storing a bitstream.

## Claims

1. An image decoding method comprising:
determining a prediction sample of a current block using a first reference block derived from a first reference picture and a second reference block derived from a second reference picture;
determining that a refinement according to bidirectional optical flow is applied to the current block, based on a temporal distance difference between the first reference picture and a current picture and a temporal distance difference between the second reference picture and the current picture;
determining a first horizontal gradient and a first vertical gradient of reference samples of the first reference block and a second horizontal gradient and a second vertical gradient of reference samples of the second reference block, in response to application of the refinement according to bidirectional optical flow;
determining a first residual small displacement of the first reference block and a second residual small displacement of the second reference block, based on the first horizontal gradient, the first vertical gradient, the second horizontal gradient, and the second vertical gradient;
determining a bidirectional optical flow offset based on the first residual small displacement and the second residual small displacement; and
refining the prediction sample of the current block based on the bidirectional optical flow offset.

2. The image decoding method of claim 1, wherein it is determined that the refinement according to bidirectional optical flow is applied to the current block, in response to magnitudes of the temporal distance difference between the first reference picture and the current picture and the temporal distance difference between the second reference picture and the current picture being different.

3. The image decoding method of claim 1, wherein it is determined that the refinement according to bidirectional optical flow is applied to the current block, in response to a temporal direction of the first reference picture from the current picture and a temporal direction of the first reference picture from the current picture being the same.

4. The image decoding method of claim 1, wherein the second residual small displacement of the second reference block is determined to be equal in magnitude to the first residual small displacement of the first reference block and opposite in direction.

5. The image decoding method of claim 1, wherein the second residual small displacement of the second reference block is determined by multiplying the first residual small displacement of the first reference block by a weight.

6. The image decoding method of claim 5, wherein the weight includes a horizontal weight for a horizontal component of the second residual small displacement and a vertical weight for a vertical component of the second residual small displacement.

7. The image decoding method of claim 5, wherein the weight is determined based on a temporal distance difference between the first reference picture and the current picture and a temporal distance difference between the second reference picture and the current picture.

8. The image decoding method of claim 7,
wherein a magnitude of the weight is determined based on a ratio of a magnitude of the temporal distance difference between the first reference picture and the current picture and a magnitude of the temporal distance difference between the second reference picture and the current picture, and
wherein a sign of the weight is determined based on a sign of the temporal distance difference between the first reference picture and the current picture and a sign of the temporal distance difference between the second reference picture and the current picture.

9. The image decoding method of claim 5,
wherein the weight is determined according to encoding information related to the current block, and
wherein the encoding information related to the current block includes at least one of frames per second of a video, a resolution of a picture, a Group of Picture (GOP) included in a picture, a slice type of a slice, and quantization parameters.

10. The image decoding method of claim 5,
wherein the weight is determined from weight information that explicitly indicates the weight, and
wherein the weight information is included in at least one of a slice header, picture header, picture parameter set, sequence parameter set, and video parameter set associated with the current block.

11. The image decoding method of claim 5, wherein the weight is derived from weights of one or more of adjacent blocks of the current block.

12. The image decoding method of claim 5, wherein the weight is determined based on weight information used for decoder-side motion vector refinement when decoder-side motion vector refinement is applied to the current block.

13. The image decoding method of claim 1,
wherein in the determining the bidirectional optical flow offset,
when a ratio of a magnitude of a temporal distance difference between the second reference picture and the current picture to a magnitude of a temporal distance difference between the first reference picture and the current picture is greater than a predetermined threshold, the bidirectional optical flow offset is determined based only on the first residual small displacement, not based on the second residual small displacement.

14. The image decoding method of claim 1,
wherein in the determining the bidirectional optical flow offset,
when a temporal distance difference between the second reference picture and the current picture is greater than a predetermined threshold, the bidirectional optical flow offset is determined based only on the first residual small displacement, not based on the second residual small displacement.

15. The image decoding method of claim 1,
wherein in the determining the bidirectional optical flow offset,
when only the first motion vector among the first motion vector and the second motion vector of the current block is refined by the decoder-side motion vector refinement, the bidirectional optical flow offset is determined based only on the first residual small displacement, not based on the second residual small displacement.

16. The image decoding method of claim 1,
wherein in the determining the bidirectional optical flow offset,
when a position corresponding to the first motion vector of the current block and the first residual small displacement is within a picture boundary or slice boundary, and a position corresponding to the second motion vector and the second residual small displacement is outside the picture boundary or slice boundary, the bidirectional optical flow offset is determined based only on the first residual small displacement and not on the second residual small displacement.

17. An image encoding method comprising:
determining a prediction sample of a current block using a first reference block derived from a first reference picture and a second reference block derived from a second reference picture;
determining that a refinement according to bidirectional optical flow is applied to the current block, based on a temporal distance difference between the first reference picture and a current picture and a temporal distance difference between the second reference picture and the current picture;
determining a first horizontal gradient and a first vertical gradient of reference samples of the first reference block and a second horizontal gradient and a second vertical gradient of reference samples of the second reference block, in response to application of the refinement according to bidirectional optical flow;
determining a first residual small displacement of the first reference block and a second residual small displacement of the second reference block, based on the first horizontal gradient, the first vertical gradient, the second horizontal gradient, and the second vertical gradient;
determining a bidirectional optical flow offset based on the first residual small displacement and the second residual small displacement; and
refining the prediction sample of the current block based on the bidirectional optical flow offset.

18. A computer-readable recording medium storing a bitstream generated by an image encoding method, the image encoding method comprising:
determining a prediction sample of a current block using a first reference block derived from a first reference picture and a second reference block derived from a second reference picture;
determining that a refinement according to bidirectional optical flow is applied to the current block, based on a temporal distance difference between the first reference picture and a current picture and a temporal distance difference between the second reference picture and the current picture;
determining a first horizontal gradient and a first vertical gradient of reference samples of the first reference block and a second horizontal gradient and a second vertical gradient of reference samples of the second reference block, in response to application of the refinement according to bidirectional optical flow;
determining a first residual small displacement of the first reference block and a second residual small displacement of the second reference block, based on the first horizontal gradient, the first vertical gradient, the second horizontal gradient, and the second vertical gradient;
determining a bidirectional optical flow offset based on the first residual small displacement and the second residual small displacement; and
refining the prediction sample of the current block based on the bidirectional optical flow offset.

19. A method of transmitting a bitstream generated by an image encoding method, the method comprising:
encoding an image based on the image encoding method; and
transmitting the bitstream including the encoded image,
wherein the image encoding method comprises:
determining a prediction sample of a current block using a first reference block derived from a first reference picture and a second reference block derived from a second reference picture;
determining that a refinement according to bidirectional optical flow is applied to the current block, based on a temporal distance difference between the first reference picture and a current picture and a temporal distance difference between the second reference picture and the current picture;
determining a first horizontal gradient and a first vertical gradient of reference samples of the first reference block and a second horizontal gradient and a second vertical gradient of reference samples of the second reference block, in response to application of the refinement according to bidirectional optical flow;
determining a first residual small displacement of the first reference block and a second residual small displacement of the second reference block, based on the first horizontal gradient, the first vertical gradient, the second horizontal gradient, and the second vertical gradient;
determining a bidirectional optical flow offset based on the first residual small displacement and the second residual small displacement; and
refining the prediction sample of the current block based on the bidirectional optical flow offset.
